# EUROPEAN PATENT SPECIFICATION

(11) **EP 1 473 988 B1**
(45) Date of publication and mention of the grant of the patent: **03.08.2005**
(21) Application number: 03705003.6
(22) Date of filing: 27.01.2003
(51) Int. Cl.: A01K 1/02

(54) **A DEVICE FOR CARRYING A FOUR-LEGGED ANIMAL**
TRAGEHILFE FÜR VIERBEINIGE HAUSTIERE
DISPOSITIF DE TRANSPORT D'ANIMAL A QUATRE PATTES

(30) Priority: 01.02.2002 EP 02425049
(43) Date of publication of application: 10.11.2004
(73) Proprietor: Ciuffo Gatto S.r.L., 10138 Torino (IT)
(72) Inventor: LEO, Franca, I-10138 Torino (IT)
(74) Representative: Gerbino, Angelo
(86) International application number: PCT/IT2003/000030
(87) International publication number: WO 2003/063582

(56) References cited:
- EP-A- 0 901 750
- DE-U- 29 701 118
- US-A- 4 644 902
- US-A- 5 738 043

## Description

The present invention relates to a device for carrying a four-legged animal, in particular a small or small-to-medium size dog. See e.g. document US-A-5 738 043.

The object of the present invention is to provide a device of the type described above which can ensure that the animal is comfortable while being carried, while at the same time being as easy as possible for a user to carry.

This object is achieved according to the invention by providing a device having the characteristics specifically claimed in the main Claim which follows. Preferential characteristics of the device of the invention are described in the dependent Claims.

Advantages and characteristics of the present invention will become apparent from the following detailed description which is provided purely by way of non-limitative example, with reference to the appended drawings, in which:
Figure 1 is a plan view of a device of the invention, in its unfolded, non-operational configuration;
Figure 2 is a perspective view of a device of Figure 1 in its operational configuration;
Figure 3 is a perspective view of the device shown in the preceding drawings with an accessory inserted therein;
Figure 4 is a plan view of a further embodiment of the device of the invention in its unfolded, non-operational configuration.
Figure 5 is a plan view of the device of Figure 4 with an accessory inserted therein, and
Figure 6 is a perspective view of the device of Figures 4 and 5 in its operational configuration.

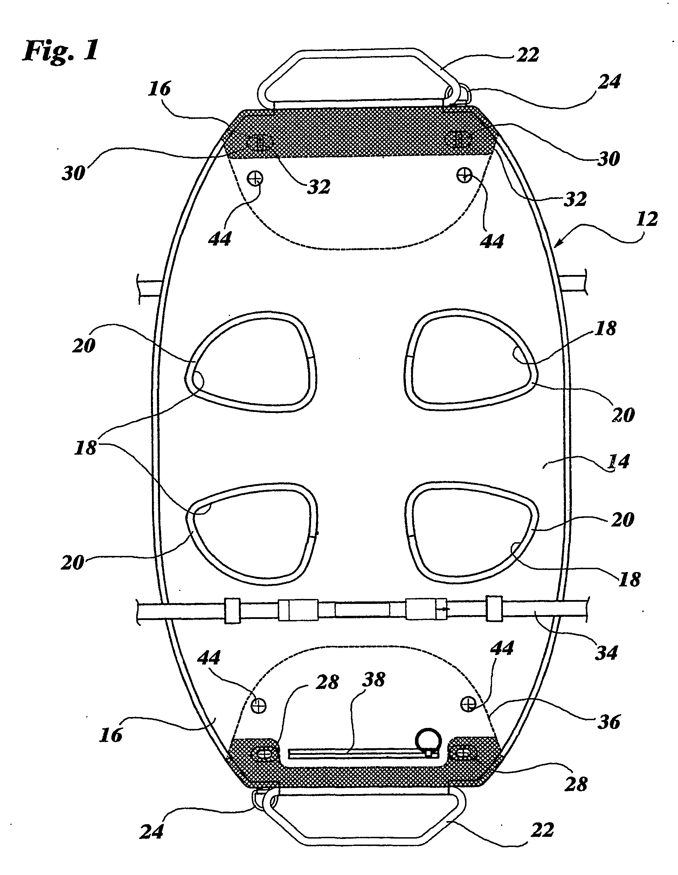

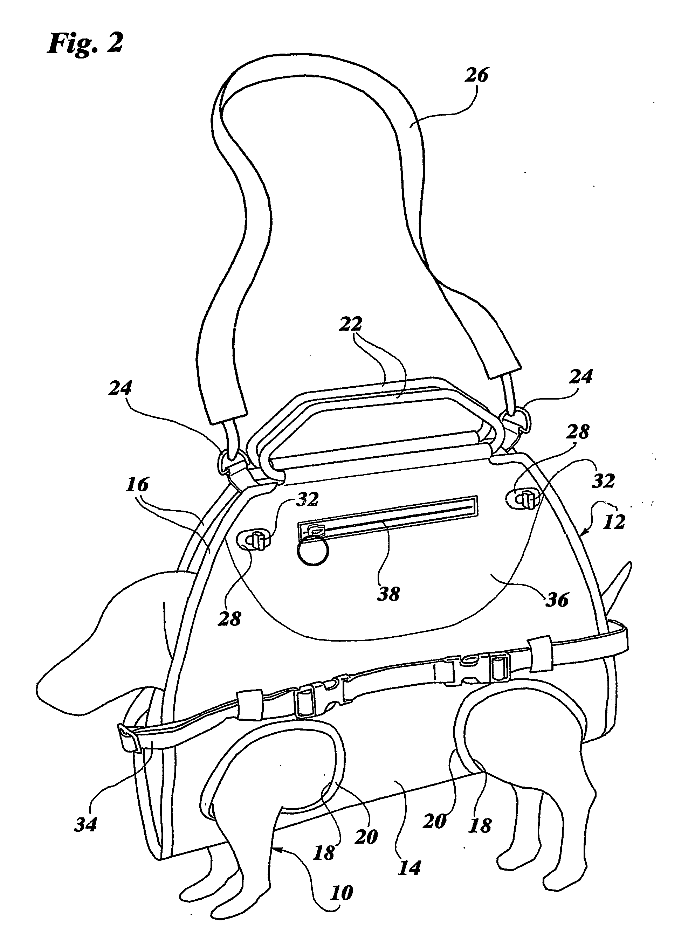

A device for carrying a four-legged animal, in particular a dog 10, comprises (see figures 1 and 2) a sheet 12 of flexible material which can be folded over so as to form a curved bottom portion 14 and an upper portion constituted by the two ends 16 of the sheet 12 which have been brought together.

Four openings 18 are formed in the bottom portion 14, positioned substantially at the four corners of a rectangle, for the legs of the dog 10 to pass through. The edges of the openings 18 have a trimming 20 of a soft material so as to avoid irritating the dog's skin.

Respective handles 22 are fitted to the top ends 16 of the sheet 12 for a user to grip with his hands. In addition, rings 24 are provided on the ends 16 of the sheet so a shoulder strap 26 can also be attached.

The device also has means for holding the two ends 16 together, in the form of slots 28 formed in one end 16 and locking devices 30 applied to a surface of the other end 16 which is opposite (in the folded configuration of the sheet 12) a respective slot 28 for selectively inserting therein. These locking devices 30 are of a conventional type, made up of a fixed base with a rotatable projection 32 operable to pass through the associated slot 28 solely when rotated at a predetermined angle relative to the fixed base.

A strap 34 is also fitted to a median portion of the outer surface of the sheet 12, while a pocket 36 with a selectively closable fastening, such as a zip 38, is applied to a top end thereof.

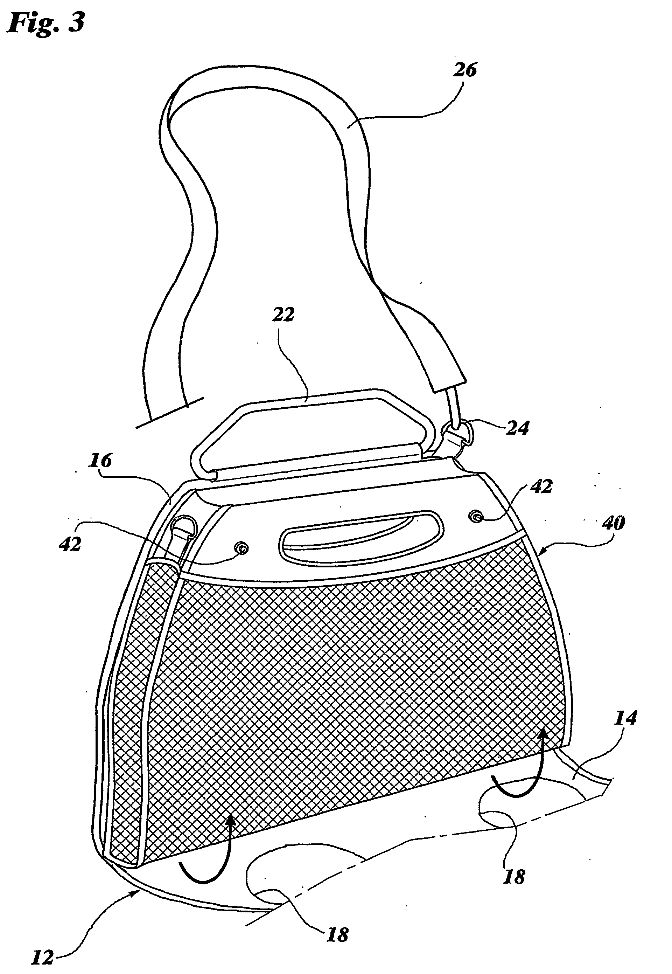

A bag 40 can also be enclosed (see Figure 3) inside the folded sheet 12 when this is not being used to carry a dog 10. The bag 40 is removably attached to the sheet 12 by means of press studs 42 for engaging in complementary seats 44 formed in the inner surface of the sheet 12.

In order to use the device described above, it is first necessary to take out the bag 40 and to disengage the rotatable projections 32 from the slots 28 so as to be able to open out the sheet 12 (see Figure 1) and position it under the dog 10 to be carried in such a way that its legs can be fitted through the apertures 18. The sheet 12 is then folded again and the rotatable projections 32 are engaged once again in the slots 28 so that the dog 10 is held inside with its legs protruding through the apertures 18 and its abdomen supported by the bottom 14 (see Figure 2). For greater safety, the strap 34 can then be secured in order to hold the dog 10 more tightly.

Depending on personal preference and specific requirements, the user can then choose whether to carry the device by gripping the handles 22 or by placing the shoulder strap 26 over one shoulder. In either case the device enables the dog 10 to be carried in a sling, with its abdomen evenly supported so as to avoid any strain on back muscles.

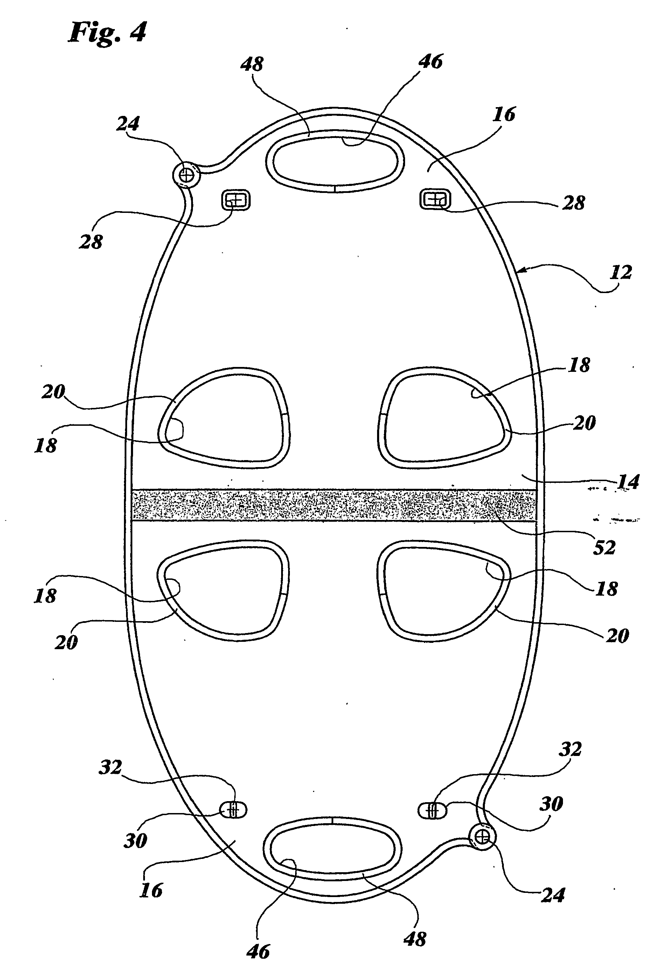

Figures 4 to 6 show a second embodiment of the invention, in which reference numbers which are the same as the ones used with reference to the preceding Figures 1 to 3 refer to similar or equivalent parts.

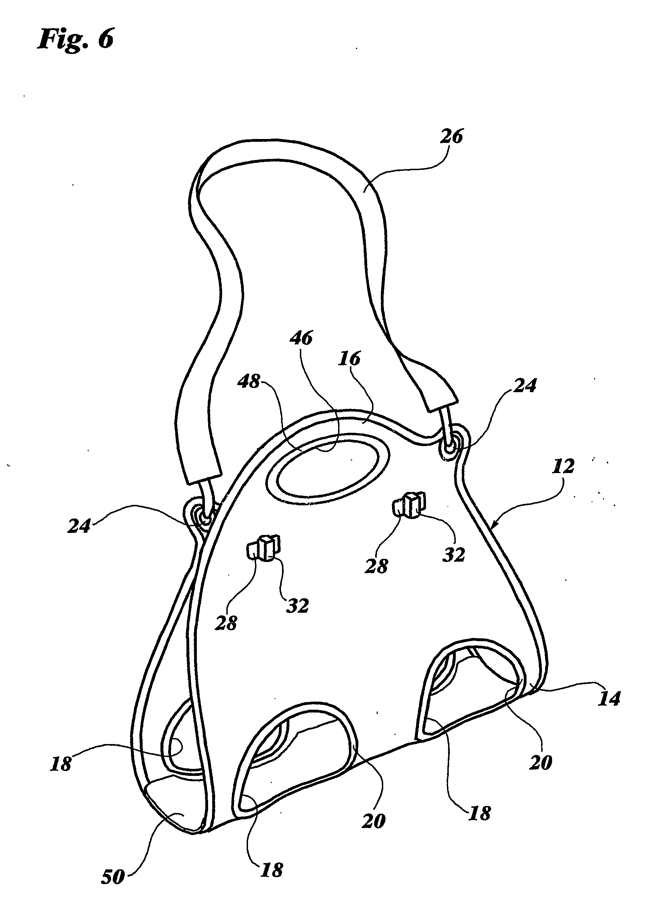

The general structure and function of the device are substantially unchanged from those described with reference to the first embodiment. In this case, however, instead of applied handles, the carrying means consist of apertures 46 formed in the two top ends of the sheet 12 so that they face each other when the sheet 12 is folded over (see Figure 6) and a user can pass his hand through them. The edges of the apertures 46 also have a trimming 48 of soft material.

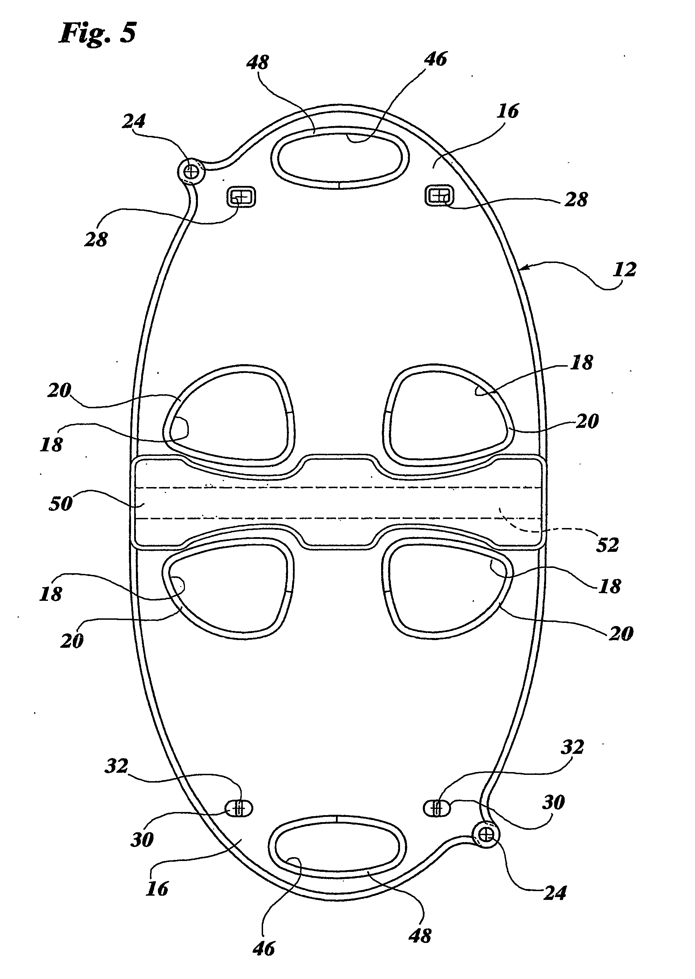

In addition, a removable insert 50 (see Figure 5) is fitted to the inside surface of the bottom portion 14 by means of hooks or velcro 52 (Figure 4). The insert 50 can be padded in order to make the dog 10 more comfortable and can be easily removed for washing or replacement should it become soiled.

Naturally, the principle of the invention remaining unchanged, manufacturing details and embodiments can be varied widely from those described and illustrated here purely by way of non-limitative example, without departing thereby from the scope of the invention as defined in the appended claims. In particular, substantially any material can be used for the sheet 12, any plastics or textile material for example, providing it is suitably flexible and would not irritate the skin of the animal being carried.

A particularly preferred material for the production of sheet 12 is a plastic material having such properties that the folded sheet 12 withstands a further bending in a direction orthogonal to the one of the first bending, e.g. homopolymer PP having flexural modulus of about 1500 N/mm² and tensile strength at yield of about 35 N/mm².

## Claims

1. A device for carrying a four-legged animal (10) which comprises a sheet (12) of flexible material which can be folded over so as to form a curved bottom portion (14), an upper portion constituted by two ends (16) of the sheet (12) which are brought together and means (28, 32) for holding the said ends (16) together, at least four apertures (18) being formed through the said bottom portion (14) so that they are arranged substantially at the four corners of a rectangle in such a way that the animal's (10) four legs can pass through them, and the said upper portion having means whereby a user can carry the said device in a suspended configuration, said device being **characterised in that** it includes a strap (34) secured to a median portion of the outer surface of the sheet (12) and **in that** the said means for holding the ends (16) together include at least one slot (28) formed in one of the said ends (16) and a locking device (30) fixed to the other end (16) so that it faces the said slot (28) and can be selectively engaged therein.

2. A device according to Claim 1, in which the said suspension means include respective rings (24) fixed to the ends (16) of the said sheet (12) for securing the ends of a shoulder strap (26) thereto.

3. A device according to any preceding Claim, in which a pocket (36) is applied to the said sheet (12) so as to be accessible from the outside.

4. A device according to any preceding Claim, having a bag (40) removably secured within the said folded sheet (12).

5. A device according to any preceding Claim, in which the suspension means include respective handles (22) fixed to the ends (16) of the said sheet (12) so that they can be gripped by a user's hand.

6. A device according to any Claim from 1 to 4, in which the said suspension means includes respective apertures (46) through the ends (16) of the sheet (12) so as to allow a user to pass a hand therethrough.

7. A device according to any preceding Claim, in which a removable insert (50) is applied to the inside surface of the said bottom portion (14).

8. A device according to Claim 7, in which the said removable insert (50) is applied to the inside surface of the bottom portion (14) by means of fixing devices such as hooks (52).

9. A device according to any preceding Claim, in which the edges of the apertures (18) have a trimming (20) of a soft material.

10. A device according to any preceding Claim, wherein the sheet (12) is of plastic material which, once the sheet (12) is bended for the first time, withstands a further bending in a direction orthogonal to the one of the first bending.

11. A device according to Claim 10, wherein said plastic material is PP.

12. A device according to Claim 11, wherein said plastic material is homopolymer PP having flexural modulus of about 1500 N/mm² and tensile strength at yield of about 35 N/mm².

## Patentansprüche

1. Vorrichtung zum Tragen eines vierbeinigen Tieres (10), welche eine Fläche (12) aus elastischem Material umfasst, die umgefaltet werden kann, um einen gekrümmten Bodenteil (14) zu bilden, sowie einen oberen Teil, der durch zwei Enden (16) der Fläche (12), die zusammengebracht werden, gebildet wird, und Mittel (28, 32) zum Zusammenhalten der Enden (16), wobei durch den Bodenteil (14) zumindest vier Öffnungen (18) gebildet sind, so dass diese im Wesentlichen an den vier Ecken eines Rechtecks in einer solchen Weise angeordnet sind, dass die vier Beine des Tieres (10) durch sie hindurchgehen können, und wobei der obere Teil Mittel aufweist, durch welche ein Benutzer die Vorrichtung in einem hängenden Zustand tragen kann, wobei die Vorrichtung **dadurch gekennzeichnet ist, dass** sie einen Riemen (34) umfasst, der an einem Mittelteil der Außenseite der Fläche (12) befestigt ist, und dass die Mittel zum Zusammenhalten der Enden (16) zumindest einen in einem der Enden (16) gebildeten Schlitz (28) umfassen, sowie eine Verschlussvorrichtung (30), die am anderen Ende (16) angebracht ist, so dass sie dem Schlitz (28) zugewandt ist und gezielt in diesen eingreifen kann.

2. Vorrichtung gemäß Anspruch 1, wobei die Aufhängemittel entsprechende Ringe (24) umfassen, die an den Enden (16) der Fläche (12) angebracht sind, um die Enden eines Schulterriemens (26) daran zu befestigen.

3. Vorrichtung gemäß irgendeinem vorhergehenden Anspruch, wobei eine Tasche (36) an der Fläche (12) angebracht ist, um von außen zugänglich zu sein.

4. Vorrichtung gemäß irgendeinem vorhergehenden Anspruch, welche einen Beutel (40) aufweist, der innerhalb der gefalteten Fläche (12) herausnehmbar befestigt ist.

5. Vorrichtung gemäß irgendeinem vorhergehenden Anspruch, wobei die Aufhängemittel entsprechende Griffe (22) umfassen, die an den Enden (16) der Fläche (12) angebracht sind, so dass sie von der Hand eines Benutzers erfasst werden können.

6. Vorrichtung gemäß einem der Ansprüche 1 bis 4, wobei die Aufhängemittel entsprechende Öffnungen (46) durch die Enden (16) der Fläche (12) umfassen, um einem Benutzer das Hindurchstrecken einer Hand zu ermöglichen.

7. Vorrichtung gemäß irgendeinem vorhergehenden Anspruch, wobei ein herausnehmbarer Einsatz (50) an der Innenseite des Bodenteils (14) angebracht ist.

8. Vorrichtung gemäß Anspruch 7, wobei der herausnehmbare Einsatz (50) durch Befestigungsvorrichtungen wie z.B. Haken (52) an der Innenseite des Bodenteils (14) angebracht ist.

9. Vorrichtung gemäß irgendeinem vorhergehenden Anspruch, wobei die Ränder der Öffnungen (18) einen Besatz (20) aus weichem Material aufweisen.

10. Vorrichtung gemäß irgendeinem vorhergehenden Anspruch, wobei die Fläche (12) aus einem Kunststoffinaterial gefertigt ist, das, sobald die Fläche (12) ein erstes Mal umgebogen ist, einem weiteren Umbiegen in einer Richtung, die zu jener des ersten Umbiegens orthogonal ist, widersteht.

11. Vorrichtung gemäß Anspruch 10, wobei das Kunststoffinaterial PP ist.

12. Vorrichtung gemäß Anspruch 11, wobei das Kunststoffinaterial Homopolymer-PP mit einem Biegemodul von etwa 1500 N/mm² und einer Zugfestigkeit von etwa 35 N/mm² ist.

## Revendications

1. Un dispositif pour porter un animal à quatre pattes (10), comprenant une feuille (12) de matériau flexible qui peut être repliée de façon à former une partie de fond (14) incurvée, une partie supérieure constituée par deux extrémités (16) de la feuille (12) qui sont amenées ensemble et des moyens (28, 32) pour maintenir ensemble lesdites extrémités (16), au moins quatre ouvertures (18) étant formées à travers ladite partie de fond (14) de sorte qu'elles soient agencées sensiblement aux quatre coins d'un rectangle de sorte que les quatre pattes de l'animal (10) puissent passer à travers les ouvertures, et ladite partie supérieure comportant des moyens grâce auxquels un utilisateur peut porter ledit dispositif dans une configuration suspendue, ledit dispositif étant **caractérisé en ce qu'**il comprend une courroie (34) fixée à une partie médiane de la surface extérieure de la feuille (12) et **en ce que** lesdits moyens pour maintenir ensemble les extrémités (16) comprennent au moins une fente (28) formée dans l'une desdites extrémités (16) et un organe de verrouillage (30) fixé à l'autre extrémité (16), de sorte qu'il se trouve en face de ladite fente (28) et puisse être sélectivement engagé dans le trou.

2. Un dispositif selon la revendication 1, dans lequel lesdits moyens de suspension comportent des anneaux (24) respectifs fixés aux extrémités (16) de ladite feuille (12) pour y fixer les extrémités d'une courroie d'épaule (26).

3. Un dispositif selon l'une quelconque des revendications précédentes, dans lequel une poche (36) est appliquée sur ladite feuille (12), de sorte à être accessible depuis l'extérieur.

4. Un dispositif selon l'une quelconque des revendications précédentes, comportant un sac (40) fixé de façon amovible à l'intérieur de ladite feuille pliée (12).

5. Un dispositif selon l'une quelconque des revendications précédentes, dans lequel les moyens de suspension comprennent des poignées (22) respectives fixées aux extrémités (16) de ladite feuille (12) de sorte qu'elles puissent être saisies par la main d'un utilisateur.

6. Un dispositif selon l'une quelconque des revendications 1 à 4, dans lequel lesdits moyens de suspension comportent des ouvertures (46) respectives à travers les extrémités (16) de la feuille (12) de sorte à permettre à un utilisateur de passer une main à travers ces ouvertures.

7. Un dispositif selon l'une quelconque des revendications précédentes, dans lequel un insert amovible (50) est appliqué sur la surface intérieure de ladite partie de fond (14).

8. Un dispositif selon la revendication 7, dans lequel ledit insert amovible (50) est appliqué à la surface intérieure de la partie de fond (14) au moyen d'organes de fixation tels que des crochets (52).

9. Un dispositif selon l'une quelconque des revendications précédentes, dans lequel les bords des ouvertures (18) comportent un contour (20) en un matériau mou.

10. Un dispositif selon l'une quelconque des revendications précédentes, dans lequel la feuille (12) est réalisée en matière plastique qui, après que la feuille (12) a été pliée pour la première fois, résiste à un autre pliage dans une direction orthogonale à celle du premier pliage.

11. Un dispositif selon la revendication 10, dans lequel ladite matière plastique est le PP (polypropylène).

12. Un dispositif selon la revendication 11, dans lequel ladite matière plastique est un homopolymère de polypropylène PP présentant un module de flexion d'environ 1500 N/mm² et une résistance à la traction en déformation permanente d'environ 35 N/mm².
